# EUROPÄISCHE PATENTSCHRIFT

(11) **EP 2 452 798 B1**
(45) Veröffentlichungstag und Bekanntmachung des Hinweises auf die Patenterteilung: **03.07.2013**
(21) Anmeldenummer: 11005974.8
(22) Anmeldetag: 21.07.2011
(51) Int. Cl.: B29C 44/56, B32B 38/00, E04F 15/20, B32B 5/18

(54) **Verfahren zur Verbindung von Schaumstoff-Folie mit mineralischen Baustoffschichten**
Method for connection of foam film with mineral material layers
Méthode de connection d'une feuille de mousse avec des couches de matériau de construction minérales

(30) Priorität: 12.11.2010 DE 102010051096
(43) Veröffentlichungstag der Anmeldung: 16.05.2012
(73) Patentinhaber: Kingspan Unidek GmbH, 75019 Bretten (DE)
(72) Erfinder: Retsch, Wolfgang, 16928 Pritzwalk (DE)
(74) Vertreter: Kaewert, Klaus

(56) Entgegenhaltungen:
- DE-A1- 4 133 634
- DE-A1- 4 325 879
- GB-A- 2 426 006

## Beschreibung

Die Erfindung betrifft die Verbindung von Kunststoff-Schaumfolie, insbesondere Polyethylenschaumfolie, mit mineralischen Baustoffschichten.

Kunststoffschaumfolie entsteht in der Regel durch Extrudieren. Dabei wird der Kunststoff mit einem Treibmittel versetzt. Das Treibmittel wird üblicherweise in den schmelzflüssigen Kunststoff eingetragen, in der Schmelze dispergiert, die Schmelz homogenisiert, auf Austrittstemperatur gekühlt und in eine Umgebung geringeren Druckes ausextrudiert wird. Das Treibmittel ist ein Gas, das nach dem Austritt aus dem Extruder expandiert und aufgrund seiner Verteilung im Kunststoff eine Vielzahl von Hohlräumen/Zellen bildet. Der Kunststoff bildet dabei die Zellwände.

Die Frage der Verbindung hat sich in der Vergangenheit bei Fugenbändern gestellt. Fugenbänder kommen in Bauwerksfugen zwischen Bauwerksteilen vor und sind aus Gründen der Dehnung/Kontraktion bei Temperaturänderung erforderlich. Anderenfalls ergibt sich eine hohe Rißbildungsgefahr im Bauwerk. Die Fugenbänder dienen dem Verschließen der Fugen. Zum Teil sollen die Fugen dabei eine Dichtwirkung entfalten. Dabei ist ein entsprechender Anschluß der Fugenbänder an die Bauwerksteile gewünscht. Vorzugsweise sind die Fugenbänder dazu in die angrenzenden Bauwerksflächen eingelassen.
Zum Teil soll nur die Fuge nachgiebig gefüllt und ein Eindringen von Feststoffen in die Fuge verhindert werden, welche die Dehnung der Bauwerksteile behindern.
Bauwerksteile können dabei Betonteile wie auch andere Teile sein.

Auch im Estrich sind teilweise Fugen vorgesehen.
Der Estrich unterliegt wie andere Bauwerksteile einer Dehnung bei Erwärmung bzw. einer Kontraktion bei Abkühlung. Der Gesamtumfang der Dehnung bzw. Kontraktion ist von den Estrichabmessungen abhängig, wobei die Länge als Faktor zum Dehnungskoeffizienten und zur Temperatur in die Rechnung eingeht.

Es ist bekannt, daß die Dehnung zu extremen Wandlasten und die Kontraktion zur Rißbildung führen kann. Bei größeren Estrichflächen ist man deshalb bemüht, Dehnungsfugen einzubauen. Die Dehnungsfugen werden so angebracht, daß die von den Dehnungsfugen und ggfs. angrenzenden Wänden/Rändern eingeschlossenen Estrichflächen nicht durch Dehnung und Kontraktion beschädigt bzw. zerstört werden.

Die Dehnungsfugen müssen nach ihrer Erstellung offen gehalten werden. Deshalb ist es nicht ausreichend, wenn mit Schalungsbrettern eine Fuge erzeugt wird. Nach Entfernen der Schalungsbretter besteht die Gefahr, daß sich die Dehnungsfuge bei weiteren Bauarbeiten durch Schmutz zusetzt. Zunächst hat das beim Vergießen von Flüssigestrich zur Anwendung von Fugenbändern geführt, wie sie an anderer Stelle bekannt sind. In neuerer Zeit ist man dazu übergegangen für die Dehnungsfugen im Estrich Kunststoffschaumstreifen zu verwenden. Dabei handelt es sich überwiegend um Kunststoffschaumstreifen, die beidseitig mit ungeschäumtem Kunststoff kaschiert sind. Der aufkaschierte ungeschäumte Kunststoff, z.B. PET, hat im Vergleich zum Kunststoffschaum eine relativ große Festigkeit und ist glatt, so daß der Estrich sich nicht in dem Material verkrallt und eine ungestörte Relativbewegung in Längsrichtung der Fuge möglich ist.
Die Schaumstreifen werden vor dem Estrichgießen aufgestellt oder nach dem Estrichgießen in den noch flüssigen Estrich gedrückt.

Der Kunststoffschaum hat so viel Steifigkeit, daß er zwar unter dem Druck des flüssigen Estrichs nicht wesentlich nachgibt, aber bei einer Wärmedehnung leicht nachgibt. Bei anschließender Kontraktion des Estrichs folgt der Kunststoffstreifen der Kontraktionsbewegung. Damit wird sichergestellt, daß kein Schmutz die Fuge ausfüllt und einer Dehnung entgegensteht.

Zum Aufstellen ist es bekannt, die Kunststoffschaumstreifen an einem L-förmigen Winkelprofil aus ungeschäumtem Kunststoff zu befestigen. Das Winkelprofil besitzt innenseitig ein doppelseitig klebendes Selbstklebeband. Die eine Seite des Selbstklebebandes ist an dem Winkelprofil verklebt, die andere besitzt eine Abdeckung. Nach Abziehen der Abdeckung kann eine Verklebung mit dem Winkelprofil hergestellt werden.

Es ist auch bekannt, die Kunststoffschaumstreifen und das Winkelprofil auf mögliche Heizleitungen einer Fußbodenheizung vorzubereiten. Bei dem Winkelprofil sind dazu halbrunde Ausnehmungen in dem nach oben ragenden Schenkel eingearbeitet. Der Kunststoffschaumstreifen besitzt in dem nach unten ragenden Rand Anstanzungen. Dabei handelt es sich um eine beidseitige Durchtrennung der aufkaschierten ungeschäumten Folie und eine Teildurchtrennung des zwischenliegenden Kunststoffschaumes, so daß der angestanzte Teil von Hand ohne Hilfe von Werkzeugen entfernt werden kann.
Nach der Verklebung wird der Kunststoffschaumstreifen mit dem Winkelprofil an der gewünschten Stelle vor dem Vergießen des Estrichs aufgestellt.

Die bisher verwendeten Kunststoffwinkel mit dem Selbstklebeband bilden einen recht aufwendigen Bestandteil. Es hat daher Bemühungen gegeben, die Montage des Kunststoffschaumstreifens mit geringerem Aufwand zu ermöglichen.

Nach einem älteren Vorschlag wird der Aufwand für die Kunststoffschaumstreifen reduziert, indem an dem unteren Ende des Schaumstoffstreifens auf anderem Wege ein Kunststoffuß gebildet wird, der an der Unterseite selbstklebend ausgebildet ist und deshalb bei seinem Andrücken an die Unterkonstruktion optimale Haftbedingungen entfaltet. Dadurch ist ein Wegrutschen des Schaumstoffstreifens beim Estrichgießen nicht zu befürchten. Die auftretenden Drücke sollen zwar gegen Null gehen, weil der Schaumstoffstreifen nicht die Funktion einer Schalung hat und nur allein eine Spaltbildung verursachen soll. Der Estrich soll nach Möglichkeit beidseitig des Schaumstreifens gleichmäßig vergossen werden. Eine übermäßig rohe Arbeit kann jedoch gleichwohl Schiebekräfte verursachen.

Zur Bildung des Kunststoffußes an dem Kunststoffschaumstreifen wird ein unterer Teil des Schaumstoffstreifens bleibend umgeknickt und unten am Fuß mit einem weiteren Kunststoffstreifen verstärkt.
Beim Abknicken gibt die aufkaschierte ungeschäumte Kunststoff-Folie eine erhebliche Hilfe, indem die Knickstelle erwärmt und in geknicktem Zustand wieder gekühlt wird. Der ungeschäumte Kunststoff gibt dem Knick in dem Kunststoffschaumstreifen so viel Festigkeit, daß eine unerwünschte Rückbildung vermieden wird. Das gilt besonders für biegesteife Kunststoffolien.

Dabei findet eine Abknickung des Kunststoffschaumstreifens nach beiden Seiten statt, so daß ggfs. auftretende Rückstellkräfte einander entgegenwirken und sich bereits weitgehend oder sogar ganz aufheben.

Für die Verlegung von Leitungen auf der Unterkonstruktion des Estrichs sind an dem älteren Kunststoffschaumstreifen unten Durchbrüche vorgesehen.

Die glatte Fläche an den Fugenbändem verhindert bei üblichem Estrich eine Verbindung von Estrich und Fugenbandoberfläche. Das kann dazu führen, daß sich Schmutz zwischen die Fugenbänder und die Estrichflächen der Fuge drückt und die Mechanik der Fugenbänder behindert. Deshalb ist die Überlegung angestellt worden, mit einem aufkaschierten Vlies eine Oberfläche an dem Fugenband zu schaffen, welche einem Verkrallen von Estrich förderlich ist.

Eine andere Anwendung von Kunststoffschaumfolie am Bau ist der Randdämmstreifen.

Der Randdämmstreifen wird üblicherweise zwischen dem Estrich und den Gebäudewänden angeordnet. Dort hat der Randdämmstreifen die Aufgabe, eine Schalldämmung zu bewirken.

Die sich im Estrich ausbreitenden Schallwellen sollen am Übergreifen auf die Bauwerkswände gedämpft werden.

Die Randdämmstreifen können verschiedene Formen und Beschaffenheit haben.

In der einfachsten Form handelt es sich um einen unbearbeiteten Schaumstreifen, der unten an den Bauwerkswänden verlegt wird, bevor der Estrich aufgebracht wird. Dabei wird der Schaumstreifen um Ecken herumgeführt und in Ecken verlegt. Dabei neigt der Schaumstreifen aufgrund seiner Rückstellkraft dazu, sich von den Bauwerkswänden abzuheben. Dem wird mit verschiedenen Sonderformen begegnet. Zu den Sonderformen gehören Mittel, welche die Randdämmstreifen in der gewünschten Stellung an den Bauwerkswänden halten. Solche Mittel sind zum Beispiel Klebestreifen. Dazu gehören auch Versteifungen den Randdämmstreifen. Vorzugsweise entstehen die Versteifungen durch abwinkelbare Füße an den Randdämmstreifen. Die abwinkelbaren Füße können angeklebt werden. Die abwinkelbaren Füße können auch durch Einschnitte an den Randdämmstreifen entstehen, die in Längsrichtung der Streifen verlaufen.

Andere Einschnitte können quer zur Längsrichtung der Randdämmstreifen verlaufen. Diese Einschnitte erleichtern die Verformung der Randdämmstreifen, welche erforderlich ist, um die Randdämmstreifen um Ecken herumzuführen bzw. in Ecken zu verlegen.

Es ist auch bekannt, Randdämmstreifen mit einem Vlies zu beschichten. Das Vlies bewirkt eine Haftung von Estrich an dem Randdämmstreifen.

Eine weitere Anwendung der Kunststoffschaumfolie am Bau ist die Verwendung als Abdichtung gegen aufsteigende Feuchtigkeit. Dabei wird die Folie auf Bodenplatten gelegt, bevor ein Fußbodenaufbau erfolgt. Die Aufgabe der Folie ist dabei, die Kapillaren zu unterbrechen, die sich ohne Folie durch die Bodenplatte ziehen.

Bekanntlich bewirken die Kapillaren ein Aufsteigen von Feuchtigkeit ohne daß ein entsprechender Flüssigkeitsdruck anliegt.

Die Folienabdichtung soll bei der Verlegung an den Bauwerkswänden in einem bestimmten Umfang hochgezogen werden.

Üblicherweise erfolgt der Fußbodenaufbau auf der Folie.

Ein zeitgemäßer Fußbodenaufbau setzt dabei eine Estrichschicht voraus. Der Estrich wird zumeist als Fließestrich auf der Folie vergossen. Für diesen Fall sieht die GB 2426006 vor, eine offenzellige Schaumfolie zu verwenden.

Die Offenzelligkeit wird nach der GB 2426006 dadurch erreicht, daß die Schaumfolie zwischen Walzen derart komprimiert wird, daß die Zellen des Schaumes platzen. Hinter dieser Technik steht die Überlegung, daß geschlossene Zellen des Schaumes die Schallwellen besser weiterleiten als offene Zellen. Das heißt, offene Zellen besitzen eine größere Schalldämmung als geschlossene Zellen.

Die Offenzelligkeit der bekannten Schaumfolie hat aber auch einen gravierenden Nachteil, weil die Festigkeit der Schaumfolie dramatisch absinkt. Bei geschlossenzelligem Kunststoffschaum befinden sich in den Schaumzellen Gaspolster. Bei einer Belastung des Kunststoffschaumes werden die extrem dünnen Zellwände im Wesentlichen auf Zug belastet. Auf Zug können die Zellwände verhältnismäßig große Kräfte aufnehmen.

Die Zellwände von offenzelligem Kunststoffschaum werden aber im Wesentlichen auf Druck belastet. Auf Druck können die extrem dünnen Zellwände nur ganz geringe Kräfte aufnehmen. Deshalb haben sich offenzellige Schaumfolien bis heute nicht als Unterlage für den Estrich durchsetzen können.

Auf die Haftung zwischen Estrich und Kunststoff-Folie haben die durch Platzen geöffneten Zellen des Schaumes nur geringen Einfluß. Jedenfalls reicht die Haftung längst nicht an die Werte heran, welche entstehen, wenn der Estrich vliesbeschichtete Folienoberflächen berührt. Obwohl Vliese an sich besonders wirtschaftlich sind und sich leicht und sicher auf Kunststoff-Folien aufkaschieren lassen, sucht die Erfindung nach einem wirtschaftlicheren Weg.

Dabei geht die Erfindung einen anderen Weg als die vorbeschriebene Verbindung von Kunststoffschaum und Mineral mit einem textilen Hilfsmittel.

Die Erfindung löst diese Aufgabe mit den Merkmalen des Hauptanspruches. Vorteilhafte Ausführungen sind Gegenstand der Unteransprüche.

Dabei wird die Oberfläche der Schaumfolie nach der Erfindung so verändert, daß sich der mineralischen Baustoffe vorteilhaft in der Oberfläche der Schaumfolie verkrallen können.

Kennzeichnend für die erfindungsgemäße Bearbeitung der Oberfläche der Schaumfolie und das Verkrallen der Mineralschicht sind:
a) reibendes und/oder schleifendes und/oder reißendes und unregelmäßiges Abtragen der Schaumoberfläche
b) anschließendes Auftragen der Mineralschicht in flüssiger/teigiger Form.

Vorzugsweise kann ein reibendes oder reißendes oder schleifendes Abtragen auf verschiedene

Weise erfolgen. Geeignete Verfahren können sein:
c)Bürsten
d)Raspeln
e)grobes Schleifen
f)Fräsen

Günstig ist dabei, wenn nicht nur die an der Oberfläche liegenden Zellen zum Eindringen der Mineralschicht geöffnet werden, sondern wenn an der Folienoberfläche auch mindestens ein Teil der oberhalb der Schneidebene liegenden Zellwände als Fetzen verbleiben. Vorzugsweise verbleibt von den oberhalb der Schneidebene liegenden Zellwänden mindestens 10% als Fetzen an der Folie, noch weiter bevorzugt mindestens 15% und höchst bevorzugt mindestens 20%.

Günstig ist auch, wenn die Fetzen im Mittel pro Quadratzentimeter eine Länge von mindestens 0,1mm aufweisen, vorzugsweise mindestens 0,2mm, noch weiter bevorzugt mindestens 0,3mm und höchst bevorzugt mindestens 0,4mm.

In der Regel sind jedoch größere Längen als 1mm in Grenzen auch geeignet, aber entbehrlich. Je geringer die Fetzenlänge in dem Bereich zwischen 0,1 und 1mm ist, desto mehr Fetzen sind erforderlich, um die Haftungsvorteile längerer Fetzen auszugleichen.

Je geringer die Anzahl der Fetzen ist, desto länger müssen die Fetzen in dem Bereich zwischen 0,1 und 1mm sein, um die Haftungsvorteile der größeren Fetzenzahl auszugleichen.

Vorzugsweise sind die Bürsten als Walzenbürsten ausgebildet. Die Borsten der Bürsten unterschiedlicher Konstruktion sein. Besonders harte Borsten entstehen durch Metallborsten in gezopfter Form. Die Zopfung entsteht durch Einsatz von Borstenbündeln, die verdrillt sind. Die Borsten können auch aus vermessingtem Stahldraht bestehen.

Die Borsten können auch durch einzelne Drähte gebildet werden.

Je nach Metall, zum Beispiel Stahl oder Messing,

je nach Länge der Drähte,

je nach Zahl der Drähte pro Flächeneinheit ergibt sich eine andere Bürstenwirkung.

Durch das Bürsten können die Zellen geöffnet werden. Dabei ist die Fetzenbildung zum Verkrallen der Mineralschicht günstig.

Günstig ist auch, wenn an der Folienoberfläche narbenartige oder noppenartige oder pockenartige Strukturen mit Erhebungen und Vertiefungen zwischen den Erhebungen entstehen, so daß auch dadurch ein Verkrallen der Mineralschicht gegeben ist.

Vorzugsweise sind Bürsten in Form von Bürstenrollen(Walzen) mit metallischen Borsten vorgesehen. Die Bürstenrollen/Walzen können rotieren, wenn die Kunststoffschaumfolie an den Bürsten/Walzen vorbeibewegt wird.

Mit wenigen Versuchen lassen sich die richtigen Bürstenrollen/Walzen und deren Drehzahl zur Erzeugung einer geeigneten Oberfläche auswählen.

Die erfindungsgemäße Oberfläche kann auch mit Fräsern oder mit Raspeln erreicht werden. Die Raspeln/Fräser besitzen an der Oberfläche eine Vielzahl vorstehender Zähne, mit denen die Oberfläche der Kunststoffschaumfolie aufgerissen wird. Vorzugsweise werden auch Raspeln/Fräser in der Form von Rollen/Walzen verwendet. Die richtigen Rollen und Walzen und deren Drehzahl lassen sich auch hier mit wenigen Versuchen auswählen.

Die erfindungsgemäße Oberfläche kann auch durch Schleifen erzeugt werden. Vorzugsweise findet Schleifpapier oder Schleifband Verwendung.

Die Wirkung von Schleifband oder Schleifpapier hängt von der Beschaffenheit des Schleifmittels und der Schleifbewegung ab. Übliche Schleifmittel sind Korund und Siliciumcarbid. Es kommen aber auch Aluminiumoxid, Zirconiumoxid und technische Keramik als Schleifmittel in Betracht.

Außerdem ist die Körnung des Schleifmittels für die Schleifwirkung bestimmend. Vorzugsweise findet eine mittlere Körnung Anwendung.

Die Körnung ist definiert durch die Maschenweite eines Siebes beim Absieben des Schleifmittels. Es geht um die Anzahl der Maschen pro Zoll. Je größer die Zahl der Maschen pro Zoll ist, desto kleiner ist die Maschenweite und desto feiner sind Schleifmittel. Vorzugsweise ist eine Maschenzahl von 40 plus/minus 10, vorzugsweise plus/minus 7, noch weiter bevorzugt plus/minus 4 und höchst bevorzugt plus/minus 1.

Je nach Maschenzahl handelt es sich um grobes oder mittleres Schleifen.

Das Schleifpapier kann mit einem herkömmlichen Schwingschleifer hin- und hergehend bewegt werden. Auch die Einspannung von Schleifpapier auf einer umlaufenden Trommel ist möglich. Auch die Anwendung eines rotierenden Schleiftellers ist möglich.

Alternativ zu den zuvor beschriebenen Schleifvorrichtungen oder zusätzlich kann ein Bandschleifer Anwendung finden. Der Bandschleifer besitzt ein umlaufendes Schleifband. Das Schleifband läuft dabei über zwei oder mehr beabstandete Führungsrollen.

Zwischen zwei Führungsrollen gleitet das Schleifband zumeist über eine Führungsfläche.

Vorzugsweise wird eine Materialschicht im Mittel von mindestens 0,4mm plus/minus 0,3mm, noch weiter bevorzugt eine Materialschicht im Mittel von mindestens 0,2mm und höchst bevorzugt im Mittel von mindestens 0,4mm durch Bürsten abgetragen. Der Abtrag kann je nach Zelldurchmesser auch 0,7mm oder 1,5mm und mehr betragen.

Dabei ist der mittlere Zelldurchmesser vorzugsweise kleiner/gleich 3mm, nach weiter bevorzugt kleiner/gleich 2mm und höchst bevorzugt kleiner/gleich 1mm. Vorzugsweise ist die Dicke der Schaumschicht vor der Bearbeitung zum Öffnen der Poren kleiner/gleich 15mm, noch weiter bevorzugt kleiner/gleich 7mm und höchst bevorzugt kleiner/gleich 4mm. Die Dicke kann auch kleiner/gleich 2mm oder 1mm sein.

Das Raumgewicht des Kunststoffschaumes ist von der Anwendung des Schaumes und von der Art des Kunststoffes abhängig. Zum Beispiel findet PE-Leichtschaum für Randdämmstreifen, Estrichfugen-Bänder und Abdichtung gegen aufsteigende Feuchtigkeit Anwendung. Dagegen ist PE-Schwerschaum für neuartige Anschlüsse von Bauwerkswänden bei Umbaumaßnahmen Anwendung.

Das Raumgewicht des PE-Schaumes ist als Schwerschaum vorzugsweise kleiner/gleich 150kg pro Kubikmeter sowie einem Raumgewicht von mindestens 60kg pro Kubikmeter, noch weiter bevorzugt kleiner/gleich 130kg pro Kubikmeter sowie mindestens 80 kg pro Kubikmeter.

Das Raumgewicht von PE-Schaum ist als Leichtschaum kleiner/gleich 40kg pro Kubikmeter und sogar kleiner oder gleich 25kg pro Kubikmeter.

Vorzugsweise ist ein PE-Schwerschaum mit einem Raumgewicht von 60 bis 130, noch weiter bevorzugt von 90 bis 110 kg pro Kubikmeter, höchst bevorzugt von 95 bis 105 kg pro Kubikmeter in der Anwendung für die Aufstellung von Trennwänden in Bauwerken vorgesehen. Dabei hat der PE-Schwerschaum besonders für die Schalldämmung in der Fuge zwischen Bauwerk und Trennwend Vorteile.

Das gilt vor allem für Gipsdielen und Leichtbetonsteine/Elemente, die mit Gips oder einem anderen Kleber an die vorhandenen Bauwerkswände angesetzt werden. Vorzugsweise wird der Schwerschaum dazu in Streifen zunächst an die vorhandenen Bauwerkswände, gegebenenfalls auch an Boden und/oder Decken verklebt, bevor die Gipsdielen oder Leichtbeton/Elemente an die Schwerschaum-Streifen angesetzt bzw. angeklebt werden.

Vorzugsweise ist ein PE-Schaum mit einem Raumgewicht bis 25 kg pro Kubikmeter in der Anwendung für Schalldärnmrandstreifen Dehnungsfugenbänder oder auf Bodenplatten mit einer Trittschalldämmung vorgesehen. Wenn zunächst die erfindungsgemäße Folie ausgelegt worden ist und dann darüber der Estrich aufgebracht wird, verbindet sich die vorher ausgelegte Folie an der bearbeiteten Oberfläche mit dem Estrich. Das erleichtert dem Estrich nach dem Aushärten eine Relativbewegung gegenüber dem Untergrund.

Außerdem kann die erfindungsgemäße Folie als Haftvermittler und elastisches Verbindungsglied zwischen Bauwerksschichten bzw. zwischen Bauwerksteilen genutzt werden.

Die Bearbeitung des PE-Schaumes zur hängt von seiner Steifigkeit ab. Vorzugsweise wird Leichtschaum als wickelfähiger PE-Schaum nach dem Extrudieren und entsprechender Abkühlung auf eine Vorratsrolle gewickelt. Zum Öffnen der Zellen an der Berührungsfläche des Schaumes mit der Mineralschicht wird der Kunststoffschaum von der Vorratsrolle abgewickelt und an der gegenüberliegenden Seite geführt, bevor die Materialschicht abgetragen wird.

Zum Führen findet wahlweise mindestens eine Walze Verwendung. Mit der Walze kann die Führung bei fortlaufender Bewegung der Schaumfolie erfolgen. Im Weiteren wird von einer Führungswalze gesprochen.

Die Führungsfunktion der Führungswalze kann durch eine Spannung in der Schaumfolie bewirkt werden. Durch die Spannung in der Schaumfolie eine Reibung der Schaumfolie auf der Führungswalze vermieden werden. Die Reibungskräfte können darüber hinaus durch eine reibungsintensive Oberfläche erhöht werden. Zusätzlich oder anstelle der Spannung kann auf der Oberfläche der Führungswalze auch ein Unterdruck an die Schaumfolie angelegt werden. Der Unterdruck entsteht zum Beispiel an einer Vielzahl gleichmäßig auf dem Mantel der

Führungswalze verteilten Ansaugöffnungen, die so gesteuert werden, daß nur die jeweils im Umschlingungswinkel (Berührungsfläche der Schaumfolie auf der Führungswalze) befindlichen Öffnungen mit Unterdruck beaufschlagt werden. Die Steuerung der Unterdruckbeaufschlagung kann mit einer Achse bewirkt werden, auf der die Walze drehbeweglich sitzt und die in Umfangsrichtung mit Kanälen versehen sind. Die Kanäle sind mit eine radialen Bohrung verbunden, die in eine axial verlaufende Bohrung münden. Die axiale Bohrung ist am Ende der Achse über eine Drehkupplung mit einer Saugleitung verbunden. Die Saugleitung führt zu einem Saugbehälter. Der Saugbehälter dient der Vergleichmäßigung des Unterdruckes. An dem Saugbehälter ist eine Saugpumpe angeschlossen, welche die Luft aus dem Saugbehälter saugt. Die Pumpe arbeitet in Intervallen. Sie springt an, wenn der Druck eine voreingestellte Höhe überschreitet. Sie wird ausgeschaltet, wenn der Druck einen voreingestellten Unterdruck erreicht hat. Die Kontakte an die Saugpumpe werden durch einen oder mehrere Druckschalter gegeben.

Auch andere Lösungen kommen für die Steuerung des Unterdruckes in Betracht.

Die Umschlingung der Führungswalze mit der Schaumfolie ist dem vorbestimmten Umschlingungswinkel angepaßt. Auch die Erstreckung der Kanäle in Umfangsrichtung ist dem gewünschten Umschlingungswinkel angepaßt.

Eine Anpassung der Führungswalze an die Breite der Schaumfolie erfolgt beispielsweise durch Verschließen derjenigen Ansaugöffnungen, die nicht von der Schaumfolie auf der Führungswalze überdeckt werden.

Anstelle oder zusätzlich zu der Führungswalze kann auch eine Bandanlage, vorzugsweise eine Plattenbandanlage, Anwendung finden. Die Bandanlage besteht aus einem umlaufenden Führungsband. Die Bandanlage besitzt an jedem Ende eine Umlenkrolle. Zwischen beiden Umlenkrollen können noch weitere Rollen vorgesehen sein, so daß zwischen den beiden Umlenkrollen eine Art Rollengang besteht, der das Band abstützt. Dies bewirkt an einer Plattenbandanlage ein besonders vorteilhaftes Widerlager.

Anstelle des Rollenganges können, insbesondere bei Verwendung einer Plattenbandlange, zwischen den Umlenkrollen auch Führungsschienen vorgesehen sein.

Jede Bandanlage ist vorzugsweise auch mit einer Spannrolle versehen. Wahlweise kann eine der Umlenkrollen auch als Spannrolle ausgebildet sein.

Die Spannung in der Schaumfolie wird vorzugsweise mit Abzugwalzen und/oder Schleppwalzen erreicht. Die Schleppwalzen drehen sich gegen einen vorzugsweise einstellbaren Widerstand, so daß die auf der Führungswalze auftreffende Schaumfolie schon unter gewünschter Spannung steht.

Die Schleppwalze kann mit der Führungswalze in einem Walzengerüst angeordnet sein. Das gleiche gilt für die Abzugwalze. Durch entsprechende Umschlingung der Schleppwalze und/oder der Abzugwalze kann ein entsprechender Zug auf die Schaumfolie ausgeübt werden.

Der PE-Schaum kann an der Berührungsfläche mit der Mineralschicht gebürstet oder geschliffen oder gefräst oder in sonstiger Weise materialabhebend bearbeitet werden.

Wahlweise können die Schaumfolien auch an der Vor- und Rückseite erfindungsgemäß bearbeitet werden. Das kann bei einer Anlage mit einseitiger Bearbeitung der Schaumfolie nach dem ersten Bearbeitungsvorgang dadurch erfolgen, daß in einem zweiten Bearbeitungsvorgang die Rückseite bearbeitet wird.

Bei größerem Bedarf an beidseitig bearbeiteten Schaumfolien kann die Bearbeitung von Vor - und Rückseite auch gleichzeitig erfolgen.

Dazu ist dann zwischen den beiden zum Abwickeln und erneutem Aufwickeln dienenden Walzen vorzugsweise sowohl oberhalb der Folie als auch unterhalb der Folie eine Bearbeitungsstation vorgesehen.

Günstig ist, wenn die beiden Bearbeitungsstationen sich genau gegenüberliegen, so daß sich die Bearbeitungsdrücke ganz oder teilweise aufheben.

Nach der Bearbeitung wird die Schaumfolie wieder aufgewickelt, um später mit einer Mineralschicht verbunden zu werden. Dabei werden nach Bedarf Schaumfolienstücke von der Rolle abgelängt.

Die so erzeugten Schaumfolien können als oben beschriebene Randdämmstreifen und Dehnungsfugenstreifen Anwendung finden.

Die erfindungsgemäßen Schaumfolien können auch als Anschlußfolien und Anschlußfolienstreifen für den Anschluß von Trockenbauwänden an Bauwerkswände und andere Einbauten dienen.

Trockenbau wird vorzugsweise überall dort eingesetzt, wo nachträglich Wände versetzt oder Türen eingebaut oder versetzt oder geschlossen werden oder ähnliche nachträgliche bauliche Maßnahmen vorkommen. Das ist insbesondere in Bürogebäuden der Fall. Dort findet immer wieder eine Veränderung von Räumen in Anpassung an Funktionen und Mitarbeiter statt. Der Trockenbau erfolgt vorzugsweise mit einem Ständerwerk aus Blechprofilen, die miteinander verschraubt werden. Das Ständerwerk wird mit Gipskartonplatten verkleidet. Dabei ist eine einschalige oder mehrschalige Verkleidung bekannt. Die Hohlräume des Ständerwerkes werden häufig mit Matten aus Glasfasern oder Mineralfasern gefüllt.

Die Anschlußfolien sind an den Stoßflächen der Trockenbauwände mit den korrespondierenden Bauwerksflächen vorgesehen. Dort haben die Anschlußfolien die Aufgabe, Schallwellen an der Ausbreitung im Bauwerk zu behindern.

Vorteilhafterweise eröffnen die erfindungsgemäßen Schaumfolien die Möglichkeit einer sehr einfachen Verbindung mit der Stoßfläche der Trockenbauwand wie auch mit der korrespondierenden Bauwerksfläche. Dabei können mineralische Baustoffe als Kleber, aber auch Kunststoffkleber mit einem mineralischen Anteil Anwendung finden, die sich in der besonderen Oberfläche der erfindungsgemäßen Schaumfolie verkrallen. Geeignete mineralische Kleber können auch Gipse und Mörtel sein. Auch Putze sind geeignet. Das sind mineralische Baustoffe, die an jeder Baustelle mehr oder weniger verfügbar sind.

Die erfindungsgemäßen Folien können auch in mehrlagigem Trockenbau eine schalldämmende Zwischenlage bilden. Der Vorteil der erfindungsgemäßen Schaumfolie ist wiederum die Möglichkeit einer einfachen und leichten Montage mit Klebern bzw. den vorstehend beschriebenen Baustoffen.

Als schalldämmende Zwischenlage zwischen den Schalen eines Trockenbaus ist eine großflächige hohlraumvermeidende Anordnung der Schaumfolie zwischen den Schalen von Vorteil.

Anstelle einer großflächen Schaumfolie können auch Stücke und Streifen von Schaumfolien zweckmäßig sein.

Die Schaumfolienstücke werden wahlweise auf die frisch ausgebrachte Mineralschicht ausgelegt, so daß sich die Mineralschicht mit dem Schaumfolienstück verbindet, wenn eine Erhärtung stattfindet.

In anderen Ausführungsbeispielen findet eine Verbindung mit einer vorgefertigten Mineralschicht, zum Beispiel einer Gipskartonschicht an der Rückseite statt, mit der die Gipskartonplatte an einer Bauwerksfläche zur Anlage kommt. Die Schaumfolie kann auch an jeder anderen Stelle der vorgefertigten Mineralschicht angebracht werden, zum Beispiel an der Frontseite oder an Schmalseiten. Es ist auch eine Anbringung an Frontseite und Rückseite möglich, auch zusammen mit einer Anbringung an mehreren Schmalseiten.

Vorzugsweise wird die vorbereitete Mineralschicht mit einer frischen, dünnen mineralischen Zwischenschicht beschichtet und darauf das Schaumfolienstück ausgelegt, so daß sich die mineralische Zwischenschicht an der einen Seite mit der vorbereiteten Mineralschicht und an der gegenüberliegenden Seite mit dem Schaumfolienstück verbindet.

In noch anderen Ausführungsbeispielen wird die Schaumfolie zunächst ausgelegt und danach die frische Mineralschicht darauf ausgebracht. Dies kann in Schritten auf ausgelegten Schaumfolienstücken oder kontinuierlich auf kontinuierlich bewegten Schaumfolien mit kontinuierlich aufgebrachtem Mineral erfolgen.

In noch anderen Ausführungsbeispielen wird zum Beispiel eine Mineralschicht zunächst auf einer Bauwerkswand aufgebracht und darauf die Kunststoffschaumschicht mit der offenporigen Seite in die noch frische Materialschicht verlegt. Dabei kann es sich um vollfläche oder teilfläche Beschichtungen der Bauwerkswand handeln.

Wahlweise ist die Kunststoffschaumfolie beidseitig in erfindungsgemäßer Weise offenporig ausgebildet, so daß auf die im Bauwerk verlegte Kunststoffschaumfolie noch eine weitere Mineralschicht aufgebracht werden kann.

Wahlweise kann die frische Mineralschicht, welche auf die im Bauwerk verlegte Kunststoffschaumschicht aufgebracht worden ist, auch als Verbindung zu einem Baufertigteil wie der oben beschriebenen Trennwand genutzt werden. Die Trennwand kann eine beliebige Trockenbauwand sein, bestehend aus Gipswanden oder aus Gasbetonplatten oder aus Bimsplatten bzw. Bimsdielen.

Frische Mineralschichten sind zum Beispiel zähflüssige und/oder teigige Schichten.

Als mineralische Schichten sind vorzugsweise Schichten aus Gips oder Mischungen mit Gips vorgesehen. Nach der Erfindung können auch solche Materialschichten in der beschriebenen Weise mit PE-Kunststoffschaum verbunden werden, die nur zu einem wesentlichen Teil aus einem mineralischen Material bestehen.

Zum Öffnen der Zellen kommen verschiedene materialabhebende Verfahren in Betracht. Vorzugsweise erfolgt der Materialabtrag durch Bürsten, aber auch durch Fräsen, alternativ durch Raspeln, gegebenenfalls auch durch Schleifen. Bei einigen Bearbeitungsvorgängen, wie dem Bürsten entsteht nicht nur eine offenporige Oberfläche, sondern auch eine narbige und pockige Oberfläche, die zum Verkrallen der Mineralschicht in dem Kunststoffschaum beiträgt.

Wahlweise kann die Oberfläche auch angerissen werden, so daß sich Zellwände ganz oder teilweise aufstellen. Dies trägt auch zum Verkrallen der

Zum Bürsten wird vorzugsweise eine Bürstenwalze (Walze mit Borsten an der Oberfläche). Die Borsten können aus unterschiedlichem Material bestehen. Bei metallischen Borsten ist ein Materialabtrag an der Schaumfolie ohne weiteres erkennbar. Aber auch mit Kunststoffborsten kann ein Materialabtrag bewirkt werden. Der Materialabtrag hängt von der Steifigkeit der Borsten und von der Umlaufgeschwindigkeit der Borsten ab. Je steifer die Borsten sind, desto mehr ähneln die Borsten Drähten und desto stärker kommt es zu einem Aufreißen oben liegender Zellwände.

Besonders stark ist die Reißwirkung beim Raspeln.

Dem Verschleiß der Borsten kann durch Nachstellen der Borsten bei der Bearbeitung des Kunststoffschaumes Rechnung getragen werden. Zur Einstellung und Nachstellung der Bürstenwalze ist die Walze wahlweise an den Enden in Kulissensteinen gehalten, die in einem Walzenständer verschiebbar sind,

Je feinkörniger und flüssiger die mit dem Kunststoffschaum zusammen gebrachte Mineralschicht ist, desto besser kann die Mineralschicht in die Poren an der Kunststoffoberfläche dringen und desto besser kann die Mineralschicht sich an Pocken und Narben verkrallen.

Günstig sind Mineralschichten mit Zement und/oder Gips, die mit Wasser angerührt und in eine teigige oder fließende Form gebracht werden und sich nach einiger Zeit verfestigen. Soweit vorbereitete mineralische Baustoffplatten mit der erfindungsgemäßen Folie ausgerüstet werden, so erfolgt das vorzugsweise in liegender Form der vorbereiteten Platten.

Die Mineralschicht wird dann mit einer Dosiervorrichtung aufgetragen und getrocknet. Das Trocknen kann mit einem Ofen bei angemessener Temperatur erfolgen.

Es sind zwar Polystyrolschaumplatten bekannt, die mit einer Mörtelschicht versehen werden. Die Kunststoffschaumplatten dienen jedoch nicht der Schalldämmung.

Zur Herstellung von Estrich mit Trittschalldämmung wird die Schaumfolie auf dem Untergrund ausgelegt und der Estrich darüber ausgebracht.

Vorteilhafterweise kann die oben beschriebene Verbindungstechnik auch auf andere Verbundmaterialen aus Kunststoffschaum und Mineralschicht Anwendung finden.

Dazu gehören unter anderem Bodenplatten, Wandplatten und Deckenplatten, an denen der Kunststoffschaum zur Schalldämmung dient.

Dazu gehören auch Gipskartonplatten, die rückseitig durch eine Kunststoffschaumschicht veredelt worden sind. Bei mehrlagigen Trockenbauwänden aus Gipskarton ist die erfindungsgemäße Schaumfolie vorzugsweise zwischen den Gipskartonschichten vorgesehen und verklebt.

Die erfindungsgemäße Folie ist auch beim Anschluß von Trockenbauwänden an Bauwerkswände und Einbauten von Vorteil, um dort eine Schalldämmung zu bewirken.

Ein vorteilhafter Anwendungsfall dieser Folien sind auch Treppenstufen. Die Treppenstufen müssen aus Sicherheitsgründen fest montiert sein. Das steht einer nachgiebigen Verbindung an sich entgegen. Wenn die erfindungsgemäße Folie zwischen der Treppe und der Trittauflage eingeklebt ist, bewirkt das einerseits die gewünschte Festigkeit und andererseits eine Nachgiebigkeit und vorteilhafte Trittschalldämmung.

Wahlweise wird bei dem erfindungsgemäßen Verfahren auch ein faserarmierter Kunststoffschaum verwendet. Die Fasern liegen in dem Kunststoffschaum. Durch Abtragen einer Materialschicht an der Berührungsfläche werden die Fasern teilweise frei gelegt. Je nach Beschaffenheit der Fasern und je nach Verfahrensweise beim Abtragen stehen mehr oder weniger Fasern aus dem Schaum vor.

Die aus dem Schaum vorstehenden Fasern werden von dem Schaum umfaßt und verstärken die Verbindung zwischen der Mineralschicht und dem Schaum.

In der Zeichnung ist ein Ausführungsbeispiel der Erfindung dargestellt.

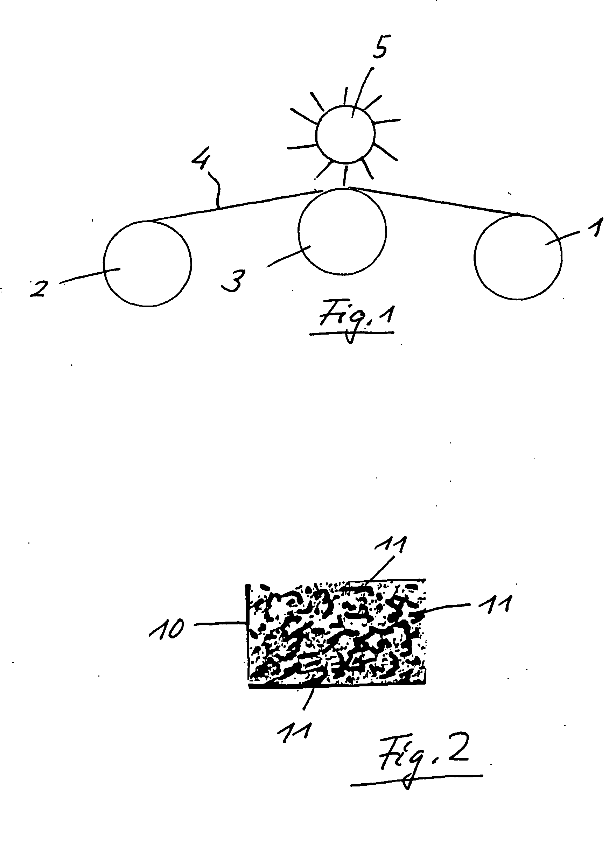

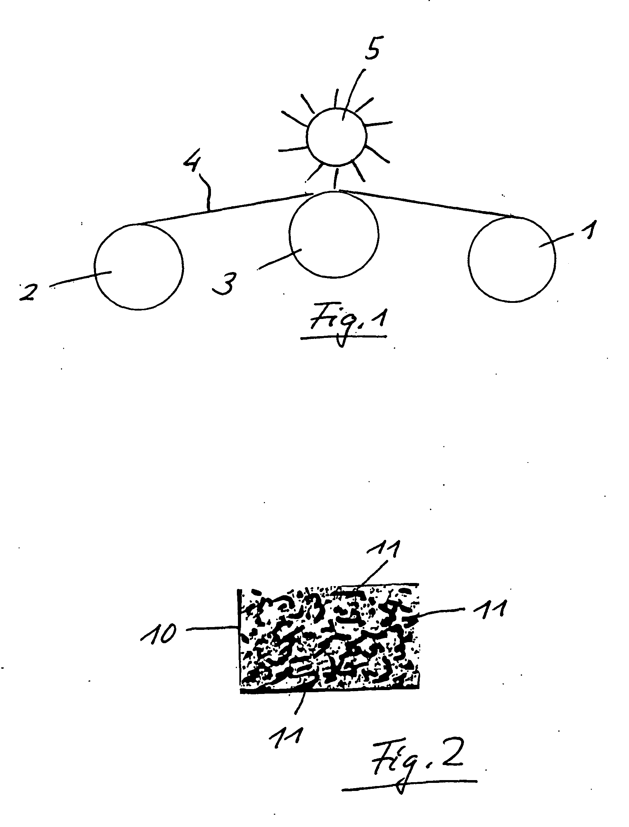

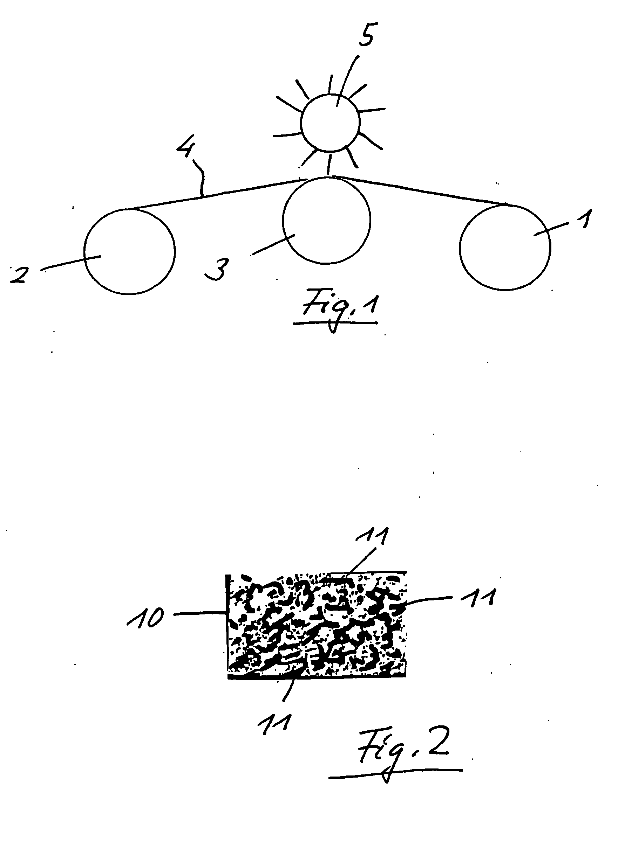

Fig.1 zeigt eine Vorrichtung zum erfindungsgemäßen Bürsten von Kunststoffschaumfolien. Die Vorrichtung besitzt eine Vorratsrolle 2 und einen Wickler 1 sowie eine Stützrolle 3.

Die Vorratsrolle 2 besitzt einen Vorrat an PE-Schaumfolie mit einer Dicke von 5mm, einem Raumgewicht von 22 kg pro Kubikmeter und einer Breite von 1000mm.

Der Schaum ist ein Leichtschaum. In anderen Ausführungsbeispielen ist das Raumgewicht geringer oder größer, zum Beispiel 100 kg pro Kubikmeter und damit ein Schwerschaum. Auch die Dicke kann geringer oder größer sein. Desgleichen kann die Breite geringer oder größer sein.

Von der Vorratsrolle wird die Schaumfolie 4 abgezogen, über die Stützrolle 3 geführt und von dem Wickler wieder aufgewickelt.

Der Stützrolle 3 gegenüberliegend ist eine Walze 5 vorgesehen, die am Umfang als Bürste 6 Stahldrähte als Borsten besitzt. Die Walze 5 ist unabhängig von der Stützwalze antreibbar, so daß mit der Bürste an der Schaumfolie ein Abrieb erzeugt werden kann. Das Maß des Abriebes wird durch die Verweildauer der Schaumfolie 4 unter der Bürste 6 und durch deren Drehzahl bestimmt. Die Verweildauer hängt von der Vorschubgeschwindigkeit der Schaumfolie 4 ab. Die Vorschubgeschwindigkeit wird durch die Wickelgeschwindigkeit/Umdrehungszahl des Wicklers 1 bestimmt. Im Ausführungsbeispiel ist der Antrieb des Wicklers 1 nicht auf die Drehzahl, sondern auf die Abzugkraft/Wicklerkraft ausgelegt. Das wird im Ausführungsbeispiel mit einem Hydraulikmotor für den Wickler erreicht. Zu dem Hydraulikmotor gehört ein nicht dargestellter Hydraulikkreis.

Die Stützrolle 3 wird im Ausführungsbeispiel mit einem Elektromotor angetrieben, der zugleich als Getriebemotor ausgebildet ist, wobei die Antriebsbewegung des Elektromotors über das Getriebe auf ein gewünschtes Maß reduziert wird.

Die Walze 5 wird wie die Stützrolle 3 angetrieben. Die Drehzahl ist aber um einiges höher eingestellt als die Drehzahl der Stützrolle 3, um den gewünschten Abrieb zu erzeugen.

Die Vorratsrolle 2 ist mit einer Bremse versehen, um zu verhindern, daß sich die Folie mehr abwickelt als erwünscht.

In anderen Ausführungsbeispielen können auch andere mechanische Antriebe und andere Antriebsmedien Anwendung finden.

Mit der in Fig. 1 dargestellten Anlage kann die Folie an einer Seite gebürstet werden. Für eine beidseitige Bearbeitung werden die Rollen 1 und 3 vertauscht und gewendet, so daß die noch unbearbeitete Unterseite nunmehr oben liegt. Danach läßt sich die Folie in gleicher Weise erneut bürsten, wie oben beschrieben.

Das Ergebnis des erfindungsgemäßen Bürstens ist in Fig. 2 dargestellt

Danach besitzt die Probe 10 darüber hinaus auch Erhebungen und Vertiefungen. Die Erhebungen sind mit 11 bezeichnet. Ihre Form ist pockenartig/narbenartig. Das erleichtert das Verkrallen von mineralischem Kleber an der Schaumfolie.

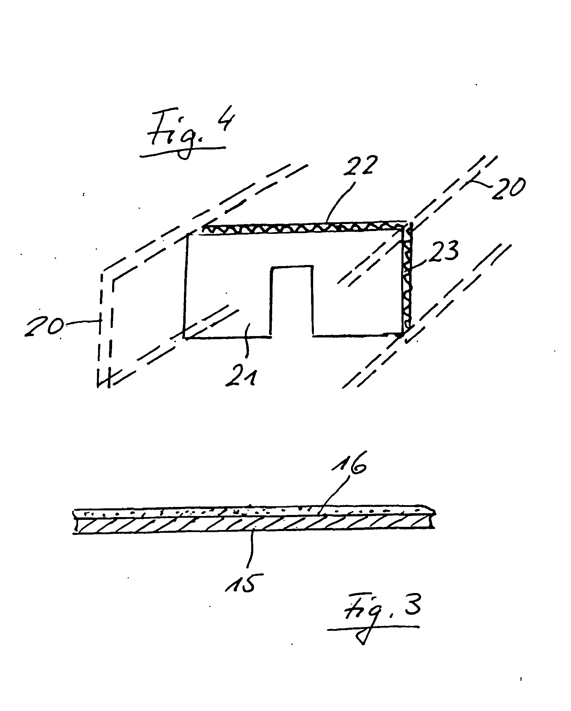

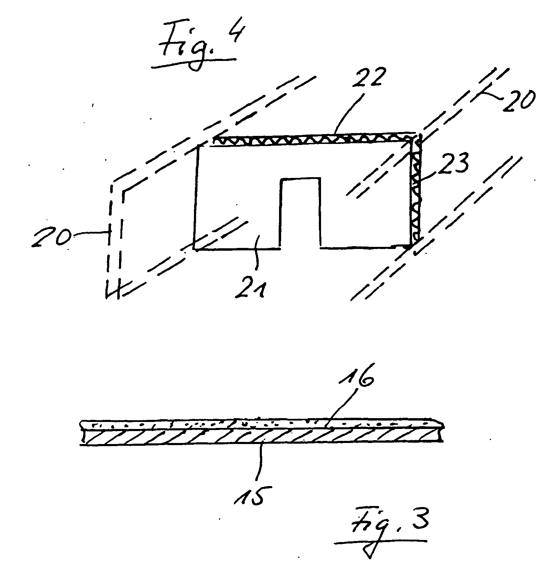

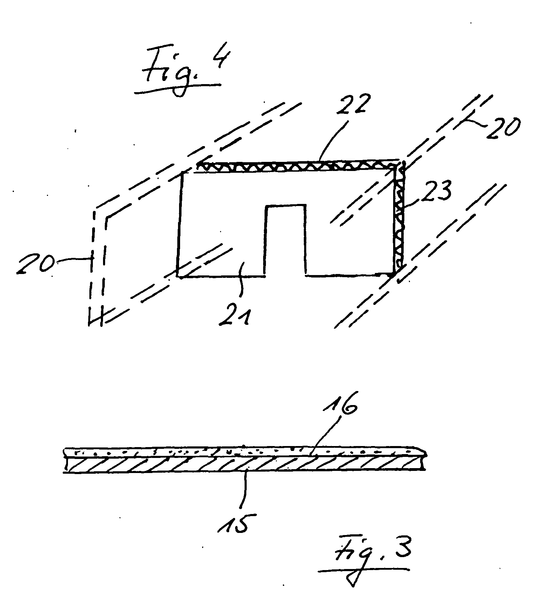

Die Beschichtung der Schaumfolie mit mineralischem Kleber ist in Fig. 3 dargestellt. Dort ist die Schaumfolie mit 15 und die Mineralschicht mit 16 bezeichnet. Die Mineralschicht 15 ist oben und unten gebürstet.

Die Anwendung der erfindungsgemäßen Schaumfolie mit mineralischem Kleber ist in Fig. 4 in Zusammenhang mit einer im Trockenbau errichteten Wand 21 dargestellt. Die Wand 23 ist zwischen zwei strichpunktiert dargestellten Gebäudewänden 20 angeordnet. Die Gebäudewände 20 sind zwischen einem nicht dargestellten Boden und einer nicht dargestellten Decke angeordnet. Dabei ist zunächst an den Gebäudewänden 20, der Decke und dem Boden im Berührungsbereich mit der Wand 21 eine Schicht aus Kleber mit mineralischen Bestandteilen angebracht worden, Anschließend ist die Folie 15 auf dem noch frischen Kleber verlegt worden. Die Trockenbauwand 21 ist danach mit Kleber an den Stirnflächen an den vorgesehenen Flächen angesetzt worden.

Im Ergebnis sind an den vertikalen Berührungsflächen schalldämmende Zwischenschichten 23 und an den horizontalen Berührungsflächen schalldämmende Zwischenschichten 22 entstanden.

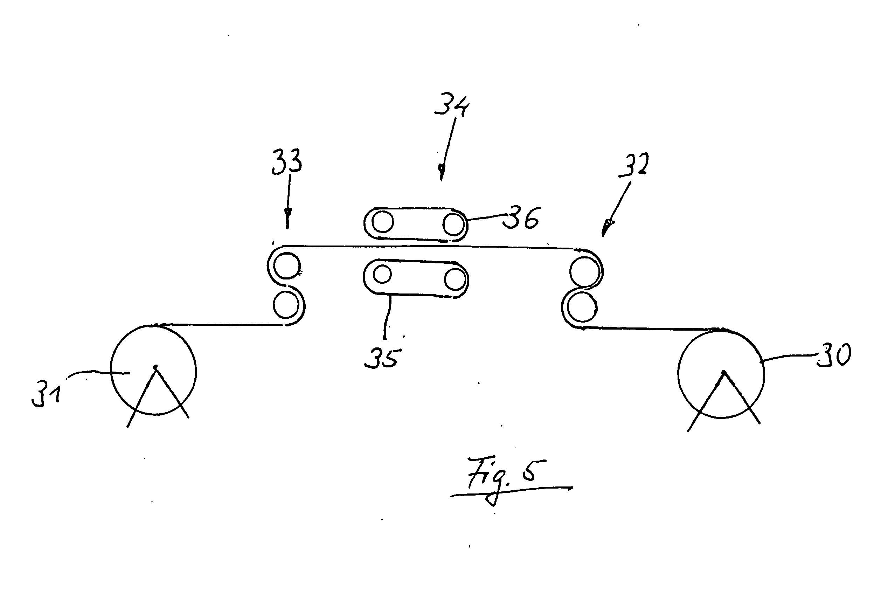

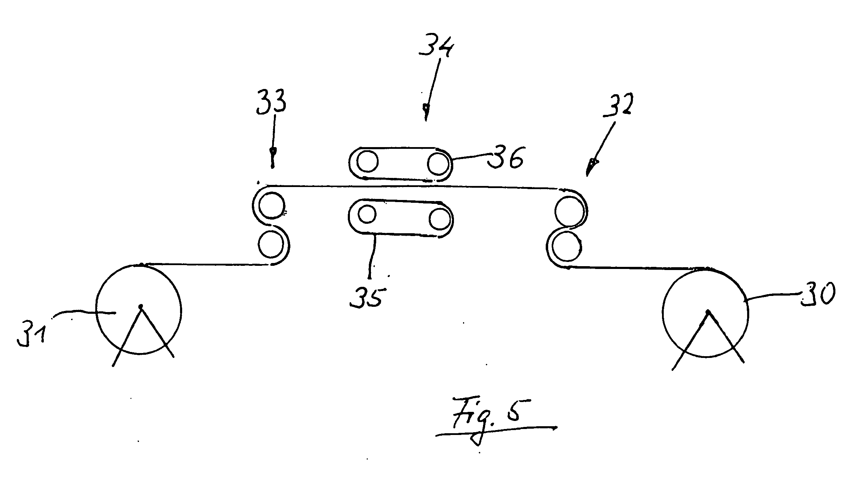

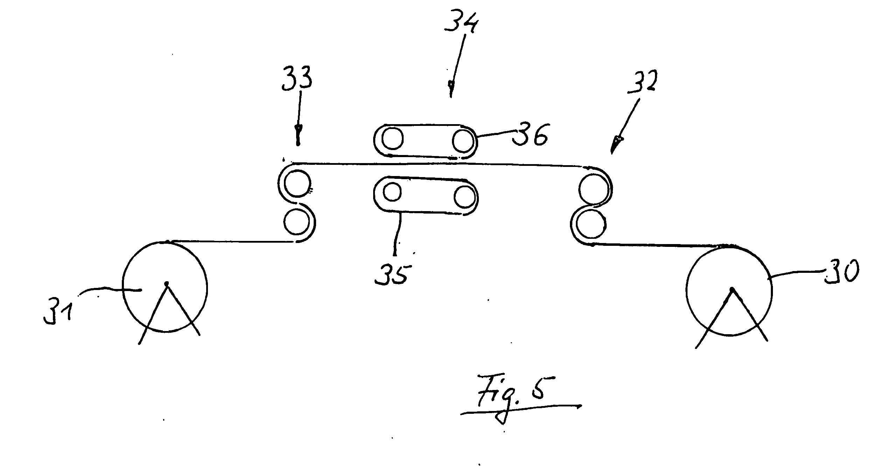

Fig. 5 zeigt eine Anlage, in der die Folie nicht gebürstet, sondern gleichzeitig beidseitig geschliffen wird.

Die Anlage besitzt einen Abwickler 31 und einen Aufwickler 30 für die Folie, ferner Walzenständer 32 und 33. Die Folie wird S-förmig durch die Walzenständer hindurchgeführt. Durch die S-förmige Führung bewirkt eine vorteilhafte Umschlingung der zugehörigen Walzen. Aufgrund der Umschlingung kann mit Hilfe der Walzenständer 32 und 33 so viel Zug auf die Folie ausgeübt werden, daß die Folie gerade verläuft.

Die Walzenständer und die darin angeordneten Walzen dienen auch dazu die Folie durch eine Schleifstation 34 zu ziehen.

Unterhalb der Folie ist ein Bandschleifer 35 und oberhalb der Folie ein Bandschleifer 36 angeordnet. Die Schleifbänder beider Bandschleifer besitzen ein Schleifmittel mit der Körnung 40. Die Körnung ist so grob, daß die Folie an der Vor- und Rückseite aufgeraut wird.

## Patentansprüche

1. Verfahren zur Herstellung von nachgiebiger Kunststoff-Schaumfolie (4,15), insbesondere Polyethylenschaumfolie, mit Schalldämmwirkung,
wobei die Schaumfolie auf einer Mineralschicht (16) oder unter oder hinter einer mineralischen Baustoffschicht (16) vorgesehen ist, unter gleichzeitiger Verbindung mit der Mineralschicht (16), wobei die Mineralschicht (16) in flüssigem oder teigigem Zustand mit der Schaumfolie (4,15) in Berührung gebracht wird, **dadurch gekennzeichnet, daß**
a)Schaumfolie (4,15) verwendet wird, deren Dicke kleiner/gleich 15mm, vorzugsweise kleiner/gleich 7mm, noch weiter bevorzugt kleiner/gleich 4mm ist
b) wobei deren mittlerer Zelldurchmesser kleiner/gleich 3mm, vorzugsweise kleiner/gleich 2mm und noch weiter bevorzugt kleiner/gleich 1 mm ist.
c)wobei ein Materialabtrag an der Berührungsfläche der Schaumfolie (4,15) mit der Mineralschicht (16) erfolgt,
d)wobei die Dicke des Materialabtrags im Mittel 0,4mm plus/minus 0,3mm ist, vorzugsweise mindestens 0,2mm und noch weiter bevorzugt mindestens 0,3mm und höchst bevorzugt mindestens 0,4mm beträgt.
e)so daß Schaumzellen an der Berührungsfläche der Schaumfolie (4,15) mit der Mineralschicht (16) geöffnet werden und die Mineralschicht (16) sich an der Berührungsfläche verkrallen kann.

2. Verfahren nach Anspruch 1, **dadurch gekennzeichnet, daß** nach dem Öffnen der Zellen von den oberhalb der Schnittfläche liegenden Zellwänden mindestens 10%, vorzugsweise mindestens 15%, noch weiter bevorzugt mindestens 20% als Fetzen an der Schaumfolie (4,15) verbleiben, wobei die Fetzen mindestens eine Länge von 0,1mm, vorzugsweise mindestens 0,2mm, noch weiter bevorzugt mindestens 0,3mm und höchst bevorzugt mindestens 0,4 mm aufweisen.

3. Verfahren nach Anspruch 2, **gekennzeichnet durch** Aufreißen der Zellen.

4. Verfahren nach einem der Ansprüche 1 bis 3, gekennzeichnet insbesondere durch Herstellen einer pockigen und/oder narbigen Berührungsfläche an der Schaumfolie (4,15).

5. Verfahren nach einem der Ansprüche 1 bis 4, **gekennzeichnet durch** einen Materialabtrag durch Bürsten der Berührungsfläche der Schaumfolie (4,15).

6. Verfahren nach einem der Ansprüche 1 bis 5, **gekennzeichnet durch** einen Materialabtrag durch Fräsen der Berührungsfläche der Schaumfolie (4,15) und/oder durch Raspeln der Berührungsfläche der Schaumfolie (4,15).

7. Verfahren nach einem der Ansprüche 1 bis 5, **gekennzeichnet durch** einen Materialabtrag durch Schleifen der Berührungsfläche der Schaumfolie (4,15).

8. Verfahren nach Anspruch 5, **gekennzeichnet durch** die Verwendung mindestens einer Bürstenwalze (6),
vorzugsweise **durch** eine anstellbare Bürstenwalze (6), und **durch** Einstellung der Walze (6) zur Erzeugung des Materialabtrages und Nachstellung der Bürstenwalze (6) nach Verschleiß der Borsten und/oder
**durch** die Verwendung von Bürsten (6) mit metallischen Borsten und/oder durch die Verwendung von Bürsten (6) mit Kunststoffborsten und/oder durch die Verwendung gebündelter Borsten.

9. Verfahren nach Anspruch 7, **gekennzeichnet durch** die Verwendung mineralischer und/oder keramischer Schleifmittel mit einer Korngröße entsprechend (bezogen auf ein Zoll) einer Maschenzahl von 40 plus/minus 7, vorzugsweise einer Maschenzahl plus/minus 4, noch weiter bevorzugt plus/minus 1.

10. Verfahren nach Anspruch 9, **gekennzeichnet durch** die Verwendung von Bandschleifer (35,36) und/oder Schwingschleifer und/oder Topfschleifer und/oder rotierender, zylinderförmiger Schleifkörper und/oder die Verwendung von Schleifband und/oder die Verwendung von Schleifpapier.

11. Verfahren nach einem der Ansprüche 1 bis 10, **dadurch gekennzeichnet, daß** die Mineralschicht in zähflüssiger oder teigiger Form auf die Schaumfolie (4,15) aufgebracht wird und/oder
daß die Schaumfolie (4,15) auf einer noch frischen Mineralschicht (16) verlegt wird und/oder daß die Mineralschicht auf eine Bauwerksfläche (20,21,22,23) oder ein vorbereitetes Bauwerksteil aufgetragen wird und die Schaumfolie (4,15) auf der noch frischen Mineralschicht verlegt wird.

12. Verfahren nach Anspruch 11, **gekennzeichnet durch**
die Aufstellung von Zwischenwänden (22,23) in Gebäuden unter mindestens teilweise mineralischer Verklebung der Zwischenwände (22,23) mit der Stirnflächen und/oder nach oben und/oder nach unten weisenden Flächen mit den vorhandenen Gebäudewänden (20,21) bzw. Gebäudedecke bzw. Gebäudeboden oder
die Verklebung von sonstigen Bauteilen über eine zwischenliegende Schaumfolie (4,15) mit dem Gebäude.

13. Verfahren nach Anspruch 11, **dadurch gekennzeichnet, daß** mehrlagige Mineralschichten (16) und/oder mehrlagige Baustoffschichten mit zwischenliegenden Schaumfolien (4,15) hergestellt werden, vorzugsweise Gipsschichten mit zwischenliegender Schaumfolie (4,15) hergestellt werden.

14. Verfahren nach Anspruch 11, **dadurch gekennzeichnet, daß** mit der auf die Schaumfolie (4,15) aufgetragenen Mineralschicht (16) eine schalldämmende Verbindung mit einem Bauwerksteil bzw. ein schalldämmender Anschluß an ein Bauwerksteil hergestellt wird.

15. Verfahren nach einem der Ansprüche 11 bis 14, **gekennzeichnet durch** a)eine vollflächige oder teilflächige Beschichtung von Bauwerksflächen mit schalldämmender Schaumfolie (4,15) und/oder
b)eine vollflächige oder teilflächige Beschichtung der Bauwerksflächen mit mindestens teilweise mineralischem Kleber.
c)eine vollflächige oder teilflächige Beschichtung der Schaumfolie (4,15) mit mindestens teilweise mineralischem Kleber

16. Verfahren nach einem der Ansprüche 15, **dadurch gekennzeichnet, daß** die Schaumfolien (4,15) einstückig oder stückweise, vorzugsweise in Streifen verlegt werden.

17. Verfahren nach einem der Ansprüche 1 bis 16, **gekennzeichnet durch** die Verwendung einer Schaumfolie (4,15) mit Schwerschaum mit einem Raumgewicht kleiner/gleich 150 kg pro Kubikmeter sowie mindestens einem Raumgewicht von 60 kg pro Kubikmeter, vorzugsweise kleiner/gleich 130kg pro Kubikmeter sowie mindestens einem Raumgewicht von 80 kg pro Kubikmeter, noch weiter bevorzugt mit einem Raumgewicht von 95 bis 105 kg pro Kubikmeter.

18. Verfahren nach einem der Ansprüche 1 bis 16, **gekennzeichnet durch** die Verwendung einer Schaumfolie (4,15) mit Leichtschaum mit einem Raumgewicht kleiner/gleich40 kg pro Kubikmeter, vorzugsweise kleiner/gleich 25 kg pro Kubikmeter.

19. Verfahren nach einem der Ansprüche 1 bis 18, **gekennzeichnet durch** die Verwendung einer faserarmierten Schaumfolie (4,15), dessen Fasern an der abgetragenen Oberfläche teilweise frei gelegt werden.

## Claims

1. Process for manufacturing resilient plastic foam films (4, 5), in particular polyethylene foam films, with acoustic insulation characteristics,
wherein the foam film is provided on a mineral layer (16) or under or behind a mineral material layer (16), concomitant with bonding to the mineral layer (16), wherein the mineral layer (16) is brought in contact in a liquid or pasty state with the foam film (4, 15), **characterised in that**
a) foam film (4, 15) is used, whose thickness is less than or equal to 15 mm, preferably less than or equal to 7 mm, even more preferably less than or equal to 4mm
b) the average cell diameter being less than or equal to 3 mm, preferably less than or equal to 2 mm, even more preferably less than or equal to 1 mm.
c) wherein a removal of material on the contact surface of the foam film (4, 15) is effected with the mineral layer (16),
d) wherein the thickness of the removed material on average is 0.4 mm plus or minus 0.3 mm, preferably at least 0.2 mm and even more preferably at least 0.3 mm and most preferably at least 0.4 mm.
e) such that foam cells on the contact surface of the foam film (4, 15) with the mineral layer (16) are opened and the mineral layer (16) can grip on the contact surface.

2. Process according to claim 1, **characterised in that** after opening the cells from the cell walls lying above the cut surface, at least 10%, preferably at least 15%, even more preferably at least 20% remain as shreds on the foam film (4, 15), wherein the length of the shreds is at least 0.1 mm, preferably at least 0.2 mm, even more preferably at least 0.3 mm and most preferably at least 0.4 mm.

3. Process according to claim 2, **characterised by** ripping the cells open.

4. Process according to one of claims 1 to 3, **characterised in** particular by producing a pimpled and/or pitted contact surface on the foam film (4, 15).

5. Process according to one of claims 1 to 4, **characterised by** removing the material by brushing the contact surface of the foam film (4, 15).

6. Process according to one of claims 1 to 5, **characterised by** removing the material by milling the contact surface of the foam film (4, 15) and/or by grating the contact surface of the foam film (4, 15).

7. Process according to one of claims 1 to 5, **characterised by** removing material by grinding the contact surface of the foam film (4, 15).

8. Process according to claim 5, **characterised by** the use of at least one brushing roller (6),
preferably by an adjustable brushing roller (6), and by setting up the roller (6) to produce the material removal and readjusting the brushing roller (6) after grinding the bristles and/or
by the use of brushes (6) with metallic bristles and/or
by the use of brushes (6) with plastic bristles and/or
by the use of bundled bristles.

9. Process according to claim 7, **characterised by** the use of mineral and/or ceramic abrasives with a particle size corresponding to (based on one inch) a mesh number of 40 plus or minus 7, preferably a mesh number plus or minus 4, even more preferably plus or minus 1.

10. Process according to claim 9, **characterised by** the use of belt sanders (35, 36) and/or orbital sanders and/or cup grinders and/or rotating cylindrical grinding wheels and/or the use of an abrasive belt and/or the use of sand paper.

11. Process according to one of claims 1 to 10, **characterised in that** the mineral layer is deposited in a liquid or pasty form onto the foam film (4, 15) and/or
that the foam film (4, 15) is laid on a still fresh mineral layer (16) and/or
that the mineral layer is applied onto a construction surface (20, 21, 22, 23) or a structural component and the foam film (4, 15) is laid on the still fresh mineral layer.

12. Process according to claim 11, **characterised by**
the installation of partition walls (22, 23) in buildings involving at least a partial adhesion of the partition walls (22, 23) with the end faces and/or upward facing and/or downward facing surfaces with the existing building walls (20, 21) or building ceiling or building floor or
the adhesion of other structural parts over an intermediate foam film (4, 15) with the building.

13. Process according to claim 11, **characterised in that** multi-ply mineral layers (16) and/or multi-ply building material layers are produced with intermediate foam films (4, 15), preferably gypsum layers are produced with an intermediate foam film (4, 15).

14. Process according to claim 11, **characterised in that** an acoustic insulating joint or an acoustic insulating connection is produced with or on a structural component with the mineral layer (16) coated foam film (4, 15).

15. Process according to one of claims 11 to 14, **characterised by**
a) a full or partial surface coating of construction surfaces with acoustic insulating foam film (4, 15) and/or
b) a full or partial surface coating of construction surfaces with the at least partly mineral adhesive.
c) a full or partial surface coating of the foam film (4, 15) with the at least partly mineral adhesive.

16. Process according to one of claims 15, **characterised in that** the foam films (4, 15) are laid in one piece or piece by piece, preferably in strips.

17. Process according to one of claims 1 to 16, **characterised by** the use of a foam film (4, 15) with low-expansion foam having a density less than or equal to 150 kg per cubic metre and at least a density of 60 kg per cubic metre, preferably less than or equal to 130 kg per cubic metre and at least a density of 80 kg per cubic metre, even more preferably with a density of 95 to 105 kg per cubic metre.

18. Process according to one of claims 1 to 16, **characterised by** the use of a foam film (4, 15) with high-expansion foam having a density less than or equal to 40 kg per cubic metre, preferably less than or equal to 25 kg per cubic metre.

19. Process according to one of claims 1 to 18, **characterised by** the use of a fibre-reinforced foam film (4, 15), whose fibres are partially exposed on the ablated surface.

## Revendications

1. Procédé destiné à la fabrication de feuille de mousse plastique souple (4, 15), en particulier de feuille de mousse en polyéthylène, avec effet isolant, la feuille de mousse étant prévue sur une couche minérale (16) ou sous ou derrière une couche minérale de matériau de construction (16), en liaison en même temps avec la couche minérale (16), la couche minérale (16) étant mise en contact à l'état liquide ou pâteux avec la feuille de mousse (4, 15), **caractérisé en ce que**
a) est utilisée la feuille de mousse (4, 15) dont l'épaisseur est inférieure ou égale à 15 mm, de préférence inférieure ou égale à 7 mm, et plus encore de préférence inférieure ou égale à 4 mm,
b) son diamètre moyen de cellule est inférieur ou égal à 3 mm, de préférence inférieur ou égal à 2 mm et plus encore de préférence inférieur ou égal à 1 mm,
c) un enlèvement de matière est réalisé au niveau de la surface de contact de la feuille de mousse (4, 15) avec la couche minérale (16),
d) l'épaisseur de l'enlèvement de matière est au centre 0,4 mm, plus ou moins 0,3 mm, de préférence au moins 0,2 mm, plus encore de préférence au moins 0,3 mm et davantage de préférence, au moins 0,4 mm,
e) de sorte que des cellules de mousse sont ouvertes au niveau de la surface de contact de la feuille de mousse (4, 15) avec la couche minérale (16) et que la couche minérale (16) peut s'accrocher au niveau de la surface de contact.

2. Procédé selon la revendication 1, **caractérisé en ce qu'**après l'ouverture des cellules, il demeure des parois de cellules situées au-dessus de la surface de coupe au moins 10 %, de préférence au moins 15 %, et plus encore de préférence 20 % en tant que lambeaux au niveau de la feuille de mousse (4, 15), les lambeaux présentant au moins une longueur de 0,1 mm, de préférence au moins 0,2 mm, plus encore de préférence au moins 0,3 mm, et davantage de préférence au moins 0,4 mm.

3. Procédé selon la revendication 2, **caractérisé par** le déchirement des cellules.

4. Procédé selon l'une des revendications 1 à 3, caractérisé en particulier par la fabrication d'une surface de contact avec des piqûres et/ou une surface de contact granulée au niveau de la feuille de mousse (4, 15).

5. Procédé selon l'une des revendications 1 à 4, **caractérisé par** un enlèvement de matière par brossage de la surface de contact de la feuille de mousse (4,15).

6. Procédé selon l'une des revendications 1 à 5, **caractérisé par** un enlèvement de matière par fraisage de la surface de contact de la feuille de mousse (4, 15) et/ou par râpage de la surface de contact de la feuille de mousse (4, 15).

7. Procédé selon l'une des revendications 1 à 5, **caractérisé par** un enlèvement de matière par meulage de la surface de contact de la feuille de mousse (4, 15).

8. Procédé selon la revendication 5, **caractérisé par** l'utilisation au moins d'un rouleau brosseur (6), de préférence par un rouleau brosseur (6) ajustable, et par le réglage du rouleau (6), pour réaliser l'enlèvement de matière et le réajustage du rouleau brosseur (6), après l'usure des poils de brosserie et/ou par l'utilisation de brosses (6) dotées de poils de brosserie métalliques et/ou par l'utilisation de brosses (6) dotées de poils de brosserie en matière plastique et/ou par l'utilisation de poils de brosserie mis en botte.

9. Procédé selon la revendication 7, **caractérisé par** l'utilisation de moyens de meulage céramiques et/ou minéraux, avec une dimension des grains (rapportée en pouce) correspondant à un nombre de mailles de 40, plus ou moins 7, de préférence d'un nombre de mailles plus ou moins 4, plus encore de préférence plus ou moins 1.

10. Procédé selon la revendication 9, **caractérisé par** l'utilisation de meule à bande (35, 36) et/ou de meule vibrante et/ou de meule à coupelle et/ou de corps de meule rotatif, de forme cylindrique, et/ou l'utilisation de bande abrasive et/ou l'utilisation de papier abrasif.

11. Procédé selon l'une des revendications 1 à 10, **caractérisé en ce que** la couche minérale est appliquée sous forme pâteuse ou visqueuse sur la feuille de mousse (4, 15) et/ou **en ce que** la feuille de mousse (4, 15) est posée sur une couche minérale (16) encore fraîche et/ou **en ce que** la couche minérale est appliquée sur une surface de l'ouvrage (20, 21, 22, 23) ou une partie de l'ouvrage préparée et **en ce que** la feuille de mousse (4, 15) est posée sur la couche minérale encore fraîche.

12. Procédé selon la revendication 11, **caractérisé par** la mise en place de parois intermédiaires (22, 23) dans des bâtiments par collage minéral au moins partiellement des parois intermédiaires (22, 23) avec les côtés faces et/ou les faces orientées vers le haut et/ou vers le bas avec les parois existantes du bâtiment (20, 21) ou du plafond du bâtiment ou du sol du bâtiment ou par le collage d'autres éléments de construction par le biais d'une feuille de mousse (4, 15) intercalée avec le bâtiment.

13. Procédé selon la revendication 11, **caractérisé en ce que** des couches minérales (16) multicouches et/ou des couches de matériau de construction (16) multicouches sont fabriquées avec des feuilles de mousse (4, 15) intercalées, de préférence des couches de plâtre fabriquées avec feuille de mousse intercalée (4, 15).

14. Procédé selon la revendication 11, **caractérisé en ce qu'**avec la couche minérale (16) appliquée sur la feuille de mousse (4, 15), il est créé une liaison insonorisante avec une partie de l'ouvrage ou un raccordement amortissant le bruit au niveau d'une partie de l'ouvrage.

15. Procédé selon l'une des revendications 11 à 14, **caractérisé**
a) **par** un revêtement complet ou partiel des surfaces de l'ouvrage avec une feuille de mousse (4, 15) insonorisante et/ou
b) par un revêtement complet ou partiel des surfaces de l'ouvrage avec au moins de l'adhésif partiellement minéral,
c) par un revêtement complet ou partiel de la feuille de mousse (4, 15) avec au moins de l'adhésif partiellement *minéral.

16. Procédé selon l'une des revendications 15, **caractérisé en ce que** les feuilles de mousse (4, 15) sont posées d'une pièce ou par morceau, de préférence en bandes.

17. Procédé selon l'une des revendications 1 à 16, **caractérisé par** l'utilisation d'une feuille de mousse (4, 15) à mousse lourde avec un poids spécifique inférieur ou égal à 150 kg par mètre cube, ainsi qu'au moins un poids spécifique de 60 kg par mètre cube, de préférence inférieur ou égal à 130 kg par mètre cube, ainsi qu'au moins un poids spécifique de 80 kg par mètre cube, et plus encore de préférence, avec un poids spécifique de 95 à 105 kg par mètre cube.

18. Procédé selon l'une des revendications 1 à 16, **caractérisé par** l'utilisation d'une feuille de mousse (4, 15) à mousse légère avec un poids spécifique inférieur ou égal à 40 kg par mètre cube, de préférence inférieur ou égal à 25 kg par mètre cube.

19. Procédé selon l'une des revendications 1 à 18, **caractérisé par** l'utilisation d'une feuille de mousse (4, 15) renforcée par des fibres posées en partie librement sur la surface usée.
